**Europäisches Patentamt**

**European Patent Office**

**Office européen des brevets**

(19)

(11) Numéro de publication: **0 115 759 B1**

(12) **FASCICULE DE BREVET EUROPEEN**

(45) Date de publication du fascicule du brevet:
17.09.86

(51) Int. Cl.⁴: **B 23 D 21/00**

(21) Numéro de dépôt: **84100002.9**

(22) Date de dépôt: **02.01.84**

(54) **Procédé et dispositif pour séparer d'une pièce tubulaire telle qu'un tuyau en fonte l'extrémité tronçonnée de celle-ci.**

(30) Priorité: **31.01.83 FR 8301462**

(43) Date de publication de la demande:
**15.08.84 Bulletin 84/33**

(45) Mention de la délivrance du brevet:
**17.09.86 Bulletin 86/38**

(84) Etats contractants désignés:
**DE GB**

(56) Documents cités:
**DE - A - 2 553 485**
**DE - C - 441 546**
**FR - A - 2 287 318**
**FR - A - 2 413 175**
**US - A - 1 618 541**
**US - A - 2 756 819**
**US - A - 3 018 678**

**DERWENT PUBLICATIONS LTD., semaine C31, 10 septembre 1980, Londres, GB.**
**DERWENT PUBLICATIONS LTD., semaine D13, 6 mai 1981, Londres, GB.**

(73) Titulaire: **PONT-A-MOUSSON S.A., 91, Avenue de la Libération, F-54017 Nancy (FR)**

(72) Inventeur: **Fuminier, Claude, 63, rue du Bois le Prêtre, F-54700 Pont a Mousson (FR)**

(74) Mandataire: **Puit, Thierry et al, c/o Centre de Recherches de Pont-à-Mousson B.P. 28, F-54703 Pont-à-Mousson Cedex (FR)**

## Description

La présente invention a pour objet un procédé pour séparer d'une pièce tubulaire en matériau rigide tel qu'un tuyau en fonte l'extrémité tronçonnée de celle-ci, ainsi qu'un dispositif pour la mise en oeuvre de ce procédé.

Plus précisément, l'invention s'applique à des machines à tronçonner les tuyaux rigides telles que celles décrites dans les FR-A-2 533 476 et 2 537 474 qui comportent des outils de coupe déplacés par des moteurs.

Dans de telles machines, utilisables pour tronçonner des tuyaux d'un diamètre important, par exemple supérieur à 300 mm, les outils de coupe sont placés au niveau des génératrices inférieures du tuyau à tronçonner, c'est-à-dire au-dessous du plan diamétral horizontal du tuyau à tronçonner. Il en résulte que l'extrémité tronçonnée risque, au moment de sa chute, de tomber sur les arêtes tranchantes des outils de coupe et de les détériorer.

L'invention se propose donc d'éviter cette interférence entre les outils de tronçonnage et l'extrémité tronçonnée.

L'invention a pour but de réaliser un procédé pour écarter et évacuer l'extrémité tronçonnée d'une pièce tubulaire afin d'éviter tout risque de chute de cette extrémité tronçonnée sur l'outil de coupe et par conséquent de détérioration de ce dernier.

Dans le procédé visé par l'invention, la pièce tubulaire est disposée horizontalement sur des moyens de support et de retenue permettant sa rotation autour de son axe longitudinal tout en l'immobilisant en translation axiale, et son extrémité est tronçonnée par au moins un outil de coupe se déplaçant vers l'axe suivant une direction radiale.

Suivant l'invention, on engage un coin d'écartement monté rotativement autour d'un axe parallèle à l'axe longitudinal de la pièce tubulaire sur un support capable de le faire avancer dans la gorge pratiquée par l'outil de tronçonnage, au fur et à mesure du tronçonnage, ladite avance ou pénétration ayant lieu dans un plan perpendiculaire à l'axe de la pièce tubulaire suivant une direction radiale d'approche vers ledit axe, et en engageant ledit coin, durant le tronçonnage, dans ladite gorge exécutée dans la paroi de la pièce tubulaire par l'outil de coupe de façon à exercer au cours du tronçonnage sur l'extrémité de la pièce tubulaire une pression qui provoque en fin de tronçonnage l'écartement et la séparation de l'extrémité tronçonnée, ce qui évite la chute de ladite extrémité sur l'outil de coupe et une détérioration de ce dernier.

Un tel procédé est particulièrement intéressant pour les tuyaux de grands diamètres dont les extrémités tronçonnées peuvent avoir un poids important.

Le dispositif pour la mise en oeuvre de ce procédé comprend un galet écarteur monté rotativement autour d'un axe parallèle à l'axe longitudinal de la pièce tubulaire à tronçonner sur un support, lui-même déplaçable suivant une direction radiale vers cet axe longitudinal dans un plan perpendiculaire à l'axe de la pièce tubulaire, ledit plan étant sensiblement médian par rapport aux flancs de la gorge pratiquée par l'outil de tronçonnage et passant par le milieu de l'arête coupante de l'outil de tronçonnage, ce galet ayant un profil en coin circulaire de section en trapèze isocèle présentant une bande cylindrique centrale bordée de deux flancs inclinés, ce coin étant dimensionné pour pénétrer dans la gorge circulaire pratiquée dans la paroi de la pièce tubulaire durant la pénétration de l'outil de tronçonnage, suivant une direction radiale de telle sorte que ses flancs inclinés exercent une pression sur les arêtes extérieures de la gorge.

Suivant une particularité de l'invention, le galet écarteur est monté rotatif autour de son axe avec un jeu axial le long de son axe de rotation.

En fin de tronçonnage, grâce à ce galet formant coin d'écartement et grâce à ce jeu axial, l'extrémité tronçonnée est donc repoussée par le flanc inclinée du coin sur lequel elle est en appui alors que le flanc incliné opposé du galet prend appui sur la tranche du tuyau immobilisée axialement. Il en résulte que l'extrémité tronçonnée ne peut pas tomber sur l'outil decoupe.

Comme on le voit, la présente invention diffère de celle du FR-A-2 172 484 qui décrit non pas une machine à tronçonner mais un coupe-tubes manuel de chantier utilisable pour tronçonner des tubes de petits diamètres compris entre 50 et 150 mm. Ce coup-tubes comporte une série de molettes tranchantes munies de cylindres d'appui latéraux et formant une chaîne disposée coaxialement autour du tube à tronçonner par les molettes tranchantes, le coupe-tubes agissant à la fois par strangulation et par coupe, et visant à éviter un effet de coin susceptible de créer une cassure irrégulière.

D'autre particularités et avantages de l'invention apparaîtrons au cours de la description qui va suivre, faite en référence aux dessins annexés sur lesquels on a représenté à titre d'exemple non limitatif, une forme de réalisation du dispositif écarteur selon l'invention.

La figure 1 est une vue en perspective d'une pièce tubulaire en cours de tronçonnage et d'un dispositif d'écartement et d'évacuation de l'extrémité tronçonnée de celle-ci conforme à l'invention.

La figure 2 est une vue en perspective partielle et à échelle agrandie du dispositif écarteur de la figure 1.

La figure 3 est une vue en perspective à échelle agrandie par rapport à la figure 2 du galet écarteur.

La figure 4 est une vue en élévation à grande échelle du galet écarteur des figures 1 à 3 et de son support durant une opération de tronçonnage d'une pièce tubulaire.

La figure 5 est une vue analogue à la figure 4 illustrant la phase d'écartement et de séparation de l'extrémité tronçonnée de la pièce tubulaire.

La figure 6 est une vue en élévation latérale analogue à la figure 5 mais à échelle réduite, montrant l'ensemble de la pièce tubulaire et de son extrémité tronçonnée ainsi qu'un moyen d'évacuation de celle-ci.

La figure 7 est une vue schématique en élévation en bout d'un dispositif de tronçonnage comportant un outil de coupe différent de celui visible aux figures 1, 2, 4 et 5, associé à un dispositif écarteur selon l'invention.

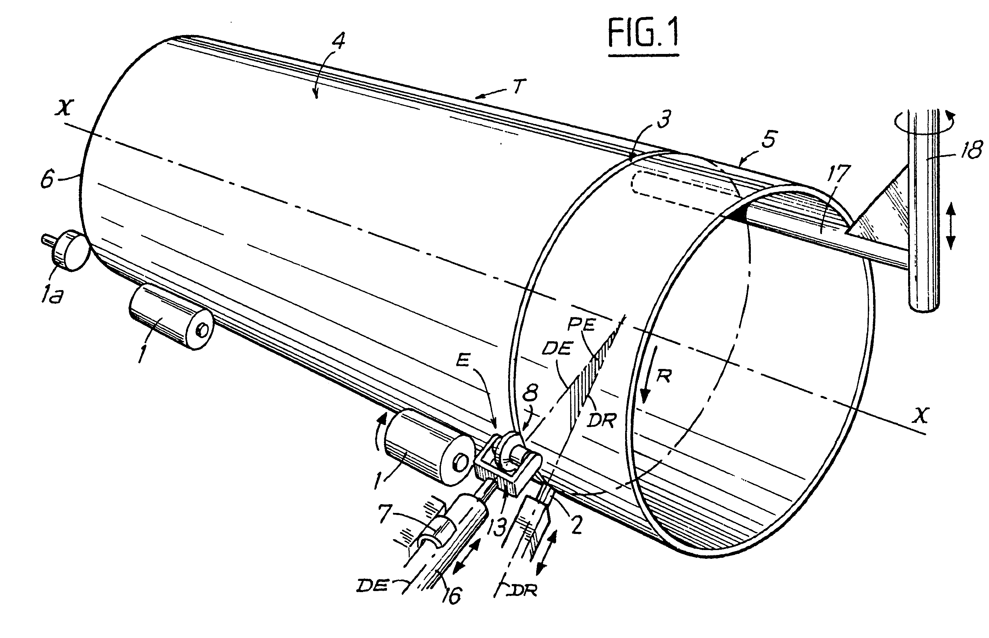

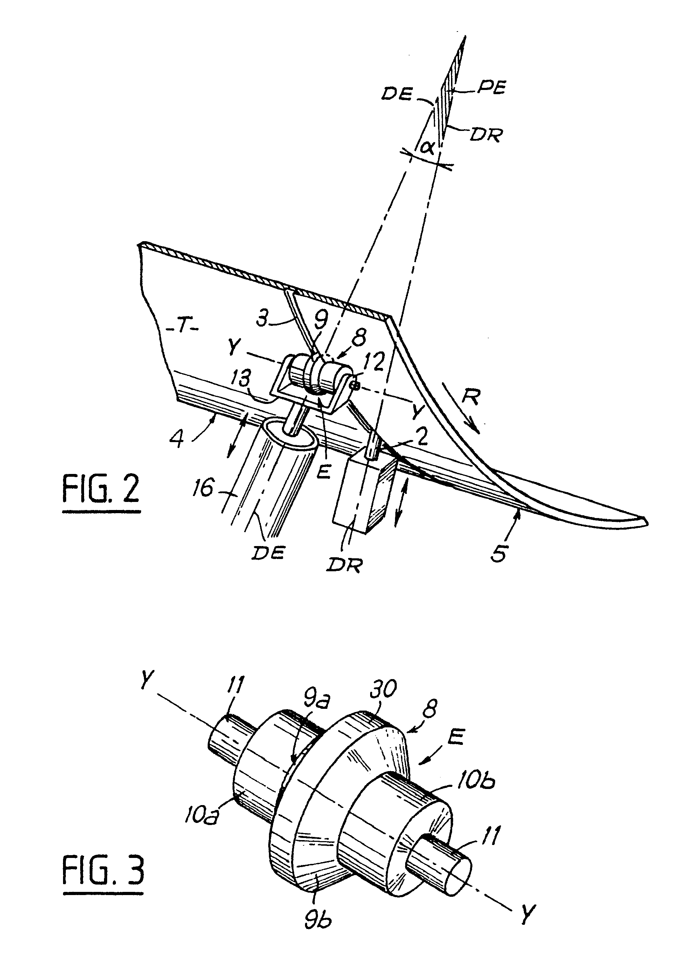

En se reportant aux figures 1 et 2, on voit une pièce tubulaire T en un matériau rigide et de grand diamètre, c'est-à-dire d'au moins 300 mm environ, tel qu'un tuyau en fonte, qui doit être tronçonnée au moyen d'un outil de coupe 2 d'une installation de tronçonnage non représentée, à l'exception de cet outil de coupe et de deux galets latéraux motorisés 1, qui supportent la pièce tubulaire T.

Une telle installation de tronçonnage peut être par exemple conforme à celle décrite au brevet français 82. 16 390 ou au brevet français 82. 20 733.

La pièce tubulaire T d'axe longitudinal X-X, est disposée horizontalement sur des moyens se support et d'entraînement en rotation autour de son axe X-X, incorporant les galets 1 d'axes parallèles à l'axe X-X, des moyens de retenue tels que par exemple un galet de butée axiale 1a étant prévus pour immobiliser la pièce T en translation axiale comme dans le brevet français 82. 16 390. Le galet de butée 1a, d'axe de rotation parallèle à l'axe X-X, est appliqué contre une tranche d'extrémité du tuyau T qui est celle opposée à celle qui va être tronçonnée.

L'outil de coupe 2 est disposé sensiblement dans un plan DR (figure 2) perpendiculaire à l'axe X-X, et peut être déplacé à travers la paroi de la pièce T suivant une direction de pénétration radiale en intersection avec l'axe X-X ou à peu près radiale passant au voisinage de celui-ci, de manière connue. Pendant la coupe, l'outil 2 pratique une gorge circulaire 3 dans la paroi de la pièce tubulaire T. Cette gorge 3 limite une zone tubulaire 4 soutenue par les galets de support 1 (ainsi que par des galets non visibles, symétriques des galets 1 par rapport à l'axe X-X) et immobilisée axialement par au moins un galet 1a, et une seconde zone 5 en porte à faux, c'est-à-dire non soutenue par les galets 1, constituant l'extrémité à tronçonner.

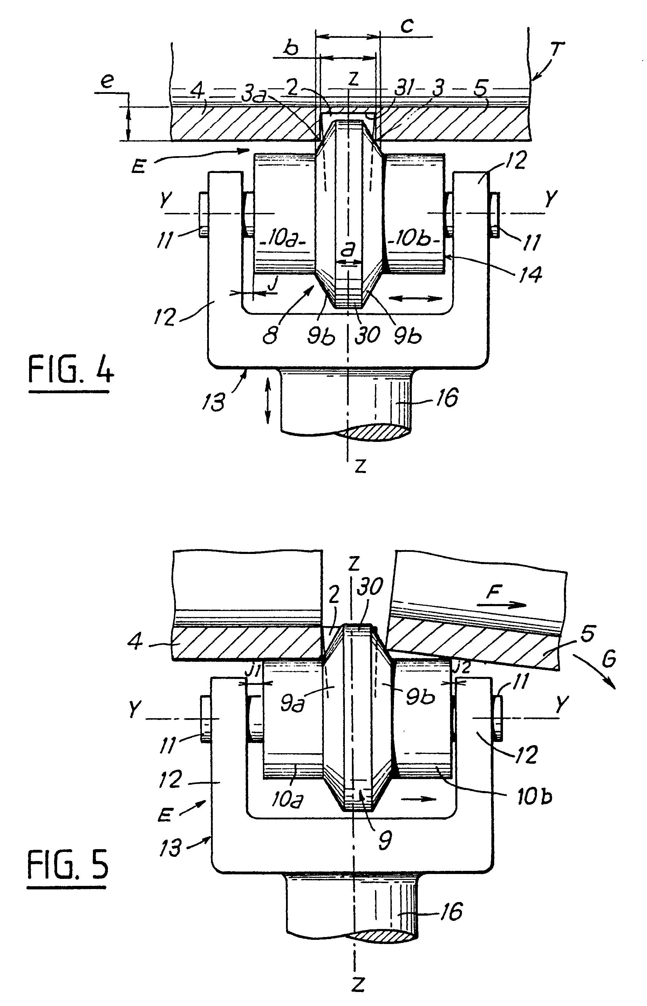

Le dispositif prévu par l'invention pour écarter et évacuer l'extrémité tronçonnée 5 comprend un galet écarteur E monté rotativement autour d'un axe Y-Y parallèle à l'axe longitudinal X-X de la pièce tubulaire T, sur un support (16, 13), lui-même déplaçable vers l'axe X-X suivant une direction radiale DE de la pièce tubulaire T, en intersection avec l'axe X-X, et dans un plan PE perpendiculaire à l'axe X-X et passant par le milieu de l'arête coupante de l'outil 2. Le galet écarteur E est disposé, compte tenu du sens de rotation du tuyau T indiqué par la flèche R, derière l'outil de coupe 2 et légèrement au-dessus de celui-ci, au droit de plan de coupe matérialisé à peu près par la gorge circulaire 3. En termes géométriques le plan de coupe est à peu près médian par rapport aux flancs de la gorge 3 et a pour trace la ligne Z-Z sur les figures 4, 5 et 6. La ligne Z-Z est également la trace du plan PE qui est le plan à peu près médian de la largeur de coupe b.

Le galet écarteur E est en forme de coin circulaire 8, visible plus particuliérement aux figures 3 à 5, flanqué de deux parties cylindriques latérales 10a, 10b solidaires dudit coin 8 et coaxiales avec celui-ci, l'ensemble du galet écarteur E présentant l'axe Y-Y comme axe de révolution. Le coin circulaire 8 a une section en trapèze isocèle présentant une bande cylindrique centrale 30 bordée de deux flancs inclinés tronconiques 9a, 9b. Compte tenu des dimensions de la gorge circulaire 3 (largeur et profondeur), la bande centrale 30 et les flancs 9a, 9b sont dimensionnés pour pénétrer dans la gorge 3 durant le tronçonnage, de telle sorte que les flancs 9a, 9b, qui présentent une inclinaison appropriée, exercent une pression sur les arêtes extérieures de la gorge 3 sans que la bande 30 ne vienne au contact du fond 31 de cette dernière, comme on le voit à la figure 4.

Plus précisément, la largeur c de la grande base du trapèze isocèle délimitant une section du coin circulaire 8, est supérieure à la largeur b de la gorge 3, elle-même égale à la largeur de l'arête de l'outil de coupe 2 (figure 4). Complémentairement, la hauteur du trapèze isocèle précité est inférieure à l'épaisseur e de la pièce tubulaire T, de sorte que la bande 30 ne peut effectivement venir au contact du fond 31 de la gorge 3, même en fin de tronçonnage. La largeur a de la petite base du trapèze isocèle, c'est-à-dire de la bande 30, est inférieure à la largeur b de la gorge 3.

Les parties ou portées cylindriques latérales 10a, 10b ont des diamètres égaux entre eux, et inférieurs à celui de la bande centrale 30, ces parties cylindriques étant prévues pour venir en contact en fin de tronçonnage, avec la zone tubulaire soutenue 4 et son extrémité tronçonnée 5. Les parties cylindriques 10a, 10b sont chacune prolongées par un tourillon 11 coaxial, monté librement rotatif dans le palier d'un montant latéral 12 d'une chape 13 en U. La chape 13 est fixée à l'extrémité de la tige de piston d'un vérin 16 de support et de manoeuvre du galet écarteur E, par exemple un vérin pneumatique porté par un bâti fixe 7 (figure 1). L'axe du corps cylindrique du vérin 16 se confond avec la direction radiale DE de déplacement du galet écarteur E. Le vérin 16 à une force de soulèvement supérieure au poids de l'extrémité à tronçonner ou chute 5, mais inférieure au poids de la zone tubulaire soutenue 4.

Les tourillons 11 étant librement rotatifs dans les montants 12, le galet écarteur E est ainsi monté fou entre les montants 12, et de plus un jeu axial (j1, j2) est réservé entre chaque partie cylindrique 10a, 10b et le montant correspondant 12, afin de permettre l'autocentrage du galet écarteur E dans la gorge 3 et surtout de permettre le déplacement axial du galet E le long de son axe Y-Y, vers l'extrémité tronçonnée 5, en fin de coupe, comme cela sera expliqué plus loin.

Suivant une particularité, l'invention prévoi que la somme des deux axiaux (j1, j2) est légèrement inférieure ou au plus égale à la largeur c de la base du coin circulaire 8, c'est-à-dire de la grande base du trapèze isocèle délimitant une section transversale de ce coin, diminuée de la largeur a de la bande 30. On a ainsi la certitude que la bande cylindrique 30 du galet s'engage bien à l'intérieur de la gorge 3. La tige du vérin 16 de support du galet écarteur E peut déplacer celui-ci suivant la direction radiale DE (figures 1 et 2) qui se confond avec la trace Z-Z (figures 4, 5, 6) du plan PE perpendiculaire à l'axe X-X de la pièce tubulaire. Ainsi le galet écarteur E peut être déplacé suivant les directions radiale DE et également axiale le long de l'axe Y-Y au cours du tronçonnage tout en conservant son axe de révolution Y-Y parallèle à l'axe longitudinal X-X de la pièce T.

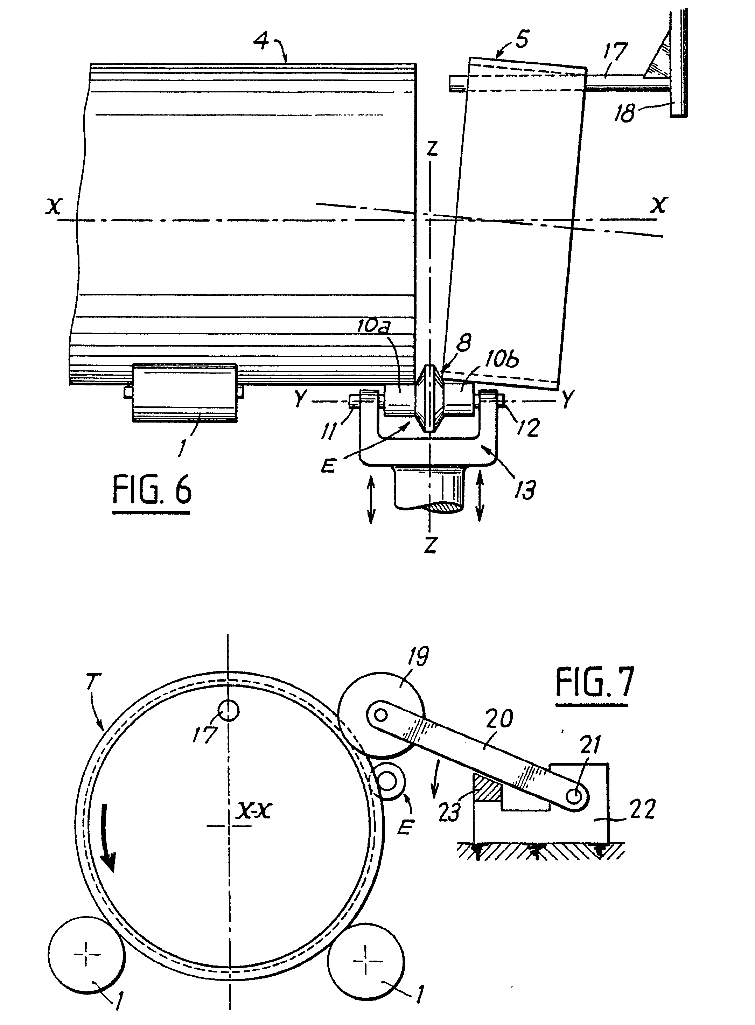

Selon une particularité complémentaire, le dispositif comprend un bras 17 (figures 1 et 6) de récupération et d'évacuation de l'extrémité tronçonnée 5. Le bras 17 est disposé sensiblement horizontalement donc parallèlement à l'axe X-X à l'intérieur de l'extrémité 5 et au voisinage de la partie supérieure de celle-ci, et il est monté rotativement sur un pivot 18 porté par un support réglable en hauteur et non représenté, afin d'évacuer latéralement l'extrémité tronçonnée 5 par exemple par rotation autour de l'axe vertical du pivot 18.

La mise en oeuvre et les avantages du dispositif d'écartement et d'évacuation de l'extrémité tronçonnée 5 qui viennent d'être décrits sont les suivants, dans le cadre du procédé également visé par l'invention.

Tout d'abord, le verin 16 et le galet écarteur E sont disposés de façon que la direction radiale DE soit légèrement décalée d'un angle α (figure 2) par rapport à la direction radiale de pénétration DR de l'outil de coupe 2 à travers la paroi du tuyau T.

Ce dernier, en appui axial contre le galet 1a, est entraîné en rotation suivant la flèche R (figures 1-2) par des moyens non représentés.

Au début de l'opération de tronçonnage, le galet écarteur E est positionné de façon que sa direction radiale d'avancement DE se confonde avec la trace Z-Z du plan de coupe médian, perpendiculaire à l'axe X-X, qui passe par le milieu du fond 31 de la gorge circulaire 3, ou au voisinage de ce milieu (figure 4), la bande cylindrique 30 étant en appui sur la paroi de la pièce tubulaire T dès le début du tronçonnage et roulant sur celle-ci.

Dès que l'outil 2 amorce la gorge 3, le verin 16 entraîne le galet écarteur E en direction de la gorge 3, suivant la direction radiale DE qui coupe l'axe X-X ou passe au voisinage de celui-ci, l'axe de révolution Y-Y restant parallèle à l'axe X-X. Lorsque le coin circulaire 8 parvient au droit de la gorge 3, il se peut que le plan médian transversal de ce coin ne soit pas parfaitement confondu avec celui de la gorge 3. Dans ce cas, les deux flancs ou versants inclinés 9a, 9b ne viennent pas simultanément en contact avec les arêtes extérieures correspondantes 3a de la gorge 3 (figure 4). Ces contacts ont lieu successivements, grâce aux jeux axiaux $j$ réservés entre les parties cylindriques 10a, 10b et les montants 12 de la chape 13, qui permettent l'autocentrage automatique du galet E par rapport à la gorge 3.

Cet autocentrage automatique est également garanti par le fait que, comme indiqué précédemment, la somme des jeux $j$ est inférieure à la largeur $c$ diminuée de la largeur $a$ de la bande cylindrique 30. Ainsi, le galet E s'engage bien dans la gorge 3 creusée par l'outil de coupe 2 sans tomber à côté de celle-ci.

Sous la poussée du verin 16 dirigée suivant l'axe Z-Z, le coin circulaire 8 s'engage donc dans la gorge 3 (figure 4). En début de coupe, la bande cylindrique 30 roule sur le fond 31 de la gorge 3. Puis, au fur et à mesure du tronçonnage par l'outil de coupe 2, les flancs 9a et 9b prennent appui sur les arêtes contiguës 3a tandis que la bande 30 s'éloigne du fond 31. En fin de tronçonnage, lors de la séparation de l'extrémité tronçonnée 5 de la partie tubulaire 4, le coin circulaire 8 poursuit sa course vers l'axe X-X (figure 5) jusqu'à ce que la partie cylindrique 10a vienne en appui contre la paroi de la partie tubulaire 4, arrêtant ainsi la pénétration du galet E dans la gorge 3.

Simultanément, jusqu'à ce que le galet E achève sa pénétration dans la gorge 3, son flanc 9a prend appui en glissant sur l'arête 3a de la partie tubulaire 4 immobilisée axialement. Ceci contraint le galet E et le coin 8 à glisser axialement par ses tourillons 11 le long de l'axe Y-Y, de sorte que le flanc incliné 9b écarte l'extrémité tronçonnée 5 dans la direction de la flèche F de la figure 5. Ceci n'est possible que grâce aux jeux axiaux j1, j2. En fin de coupe (figure 5), les jeux axiaux se répartissent donc en deux jeux inégaux, j1 du côté de la partie 4, j2 du côté de l'extrémité tronçonnée 5, j2 étant sensiblement inférieur à j1. L'extrémité 5 vient alors s'appuyer d'abord tangentiellement sur la partie cylindrique 10b, puis bascule sur l'arête extérieure de celle-ci comme indiqué par la flèche G, après avoir été écartée de l'outil 2 par le galet E dans une direction approximativement parallèle à l'axe X-X de la pièce tubulaire T. L'extrémité tronçonnée 5 est alors reçue par le bras de support 17 qui arrête sa chute , et donc la rotation autour du pivot 18, commandé par un moyen connu en soi et non représenté, permet d'évacuer le tronçon 5.

Après avoir arrêté la rotation du tuyau T, ou peu avant cet arrêt, on commande le verin 16 pour ramener le galet écarteur E à sa position de départ, en vue de l'opération suivante de tronçonnage.

L'avantage essentiel du dispositif écarteur prévu par l'invention réside donc dans le fait qu'il empêche l'extrémité tronçonnée 5 de tomber sur l'arête de l'outil de coupe 2 et d'endommager celui-ci. En tout état de cause, le galet écarteur E rompt la pellicule du fond de gorge 3, en fin de tronçonnage, avant que l'outil de coupe 2 ne traverse la gorge 3.

Dans un autre mode de réalisation du dispositif de tronçonnage, l'outil de coupe est une meule-disque 19 (figure 7), à mouvement pendulaire, portée par un levier 20 articulé autour d'un arbre 21 solidaire d'un bâti 22. Le galet écarteur E est disposé au-dessous de la meule-disque 19 et s'engage comme dans l'exemple de réalisation précédent, dans la gorge circulaire pratiquée par celle-ci, au-dessous et au plus près de la meule-disque 19. Pour éviter que celle-ci, qui travaille par gravité, ne tombe sur le galet E à la fin du tronçonnage, il est prévu une butée 23 solidaire du bâti 22, qui limite la course du levier 20. D'autre part, le dispositif comporte comme précédemment un bras de soutien et d'évacuation 17.

## Revendications

1. Procédé pour séparer d'une pièce tubulaire (T), telle qu'un tuyau en fonte (4) l'extrémité tronçonnée (5) de celle-ci, dans lequel la pièce tubulaire (T) est disposée horizontalement sur des moyens de support (1) et de retenue permettant sa rotation autour de son axe longitudinal (X-X) tout en l'immobilisant en translation axiale, son extrémité (5) étant tronçonnée par au moins un outil de coupe ou de tronçonnage (2) se déplaçant vers l'axe (X-X) suivant une direction radiale (DR), caractérisé en ce qu'on engage un coin d'écartement (E, 8) monté rotativement autour d'un axe (Y-Y) parallèle à l'axe longitudinal de la pièce tubulaire sur un support (16, 13) capable de le faire avancer dans la gorge (3) pratiquée par l'outil de tronçonnage (2), au fur et à mesure du tronçonnage, ladite avance ou pénétration ayant lieu dans un plan (PE) perpendiculaire à l'axe (X-X) de la pièce tubulaire (T) suivant une direction radiale (DE) d'approche vers ledit axe (X-X), en engageant ledit coin (E), durant le tronçonnage, dans ladite gorge (3) exécutée dans la paroi de la pièce tubulaire (T) par l'outil de coupe (2) de façon à exercer au cours du tronçonnage sur l'extrémité (5) de la pièce tubulaire (T), une pression qui provoque en fin de tronçonnage l'écartement et la séparation de l'extrémité tronçonnée (5), ce qui évite la chute de ladite extrémité sur l'outil de coupe (2) et une détérioration de ce dernier.

2. Dispositif pour séparer d'une pièce tubulaire (T), telle qu'un tuyau en fonte (4) l'extrémité tronçonnée (5) de celle-ci, dans lequel la pièce tubulaire (T) est disposée horizontalement sur des moyens de support (1) et de retenue permettant sa rotation autour de son axe longitudinal (X-X) tout en l'immobilisant en translation axiale, son extrémité (5) étant tronçonnée par au moins un outil de coupe ou de tronçonnage (2) se déplaçant vers l'axe (X-X) suivant une direction radiale (DR), caractérisé en ce qu'il comprend un galet écarteur (E) monté rotativement autour d'un axe (Y-Y) parallèle à l'axe longitudinal (X-X) de la pièce tubulaire (T) à tronçonner sur un support (16, 13), lui-même déplaçable suivant une direction radiale (DE) vers cet axe longitudinal (X-X) dans un plan (PE) perpendiculaire à l'axe (X-X) de la pièce tubulaire (T), ledit plan (PE) étant sensiblement médian par rapport aux flancs de la gorge (3) pratiquée par l'outil de tronçonnage (2, 19), et passant par le milieu de l'arête coupante de l'outil de tronçonnage (2, 19), ce galet écarteur (E) ayant un profil en coin circulaire (8) de section en trapèze isocèle présentant une bande cylindrique centrale (30) bordée de deux flancs inclinés (9a, 9b), ce coin (8) étant dimensionné pour pénétrer dans la gorge circulaire (3) formée dans la paroi de la pièce tubulaire (T) durant la pénétration de l'outil de tronçonnage (2), suivant une direction radiale (DR) de telle sorte que ses flancs inclinés (9a, 9b) exercent une pression sur les arêtes extérieures de la gorge (3).

3. Dispositif selon la revendication 2, caractérisé en ce que le galet écarteur (E) comporte deux parties cylindriques latérales (10a, 10b), placées de part et d'autre du coin circulaire (8) coaxialement et solidairement avec ce dernier, et dont les diamètres, égaux entre eux, sont inférieurs à celui de la bande centrale (30) du coin circulaire (8), l'axe de révolution et de rotation desdites parties cylindriques et du coin constituant l'axe général (Y-Y) du galet écarteur (E) et ces aprties cylindriques (10a, 10b) étant prévues pour venir prendre appui en fin de tronçonnage contre la pièce tubulaire (T) et son extrémité tronçonnée (5) afin de limiter la course du galet (E) suivant la direction radiale (DE).

4. Dispositif selon l'une des revendications 2 et 3, caractérisé en ce que la largeur (c) de la grande base de trapèze isocèle formant le coin circulaire (8) est supérieure à la largeur (b) de la gorge circulaire (3), elle-même égale à la largeur de l'arête de l'outil de coupe (2).

5. Dispositif selon l'une des revendications 3 et 4, caractérisé en ce que les parties cylindriques (10a, 10b) du galet écarteur (E) sont chacune prolongées par un tourillon (11) coaxial, monté librement rotatif dans le palier d'un montant latéral (12) d'une chape (13) de support du galet écarteur (E), qui est ainsi monté fou entre les montants (12) de la chape (13), un jeu (j) axial étant réservé entre chaque partie cylindrique (10, 10b) et le montant correspondant (12) de la chape (13) afin de permettre l'autocentrage du galet (E) dans la gorge (3) et le déplacement axial du galet (E) le long de son axe (Y-Y) en vue d'éloigner l'extrémité tubulaire tronçonnée (5).

6. Dispositif selon la revendication 5, caractérisé en ce que la somme des jeux axiaux (j) entre chaque montant (12) de la chape (13) et la partie cylindrique (10a, 10b) contiguë est inférieure à la largeur (c) de la base du coin circulaire (8), c'est-à-dire du trapèze isocèle formant la section dudit coin, diminuée de la largeur (a) du méplat central (30) de ce coin (8), afin de garantir la pénétration de ce dernier dans la gorge (3) au début du tronçonnage.

7. Dispositif selon l'une des revendications 5 et 6, caractérisé en ce que la chape (13) est fixée à l'extrémité d'un vérin (16) de support du galet écarteur (E), porté par un bâti fixe (7) et dont l'axe (DE) qui se confond avec la direction radiale (DE) est situé dans le plan (PE) précité perpendiculaire à l'axe (X-X) de la pièce tubulaire (T) ainsi que dans le plan médian de trace (Z-Z) passant par le milieu de l'arête coupante de l'outil de coupe (2), de façon que le galet écarteur (E) puisse être déplacé suivant la direction (DE) radiale au corps du tronçonnage tout en conservant son axe de révolution (Y-Y) parallèle audit axe longitudinal (X-X) de la pièce tubulaire (T).

8. Dispositif selon la revendication 2, caractérisé en ce que la direction radiale d'avance (DE) du galet écarteur (E) et la direction radiale d'avance (DR) de l'outil de tronçonnage (2, 19) sont décalées angulairement d'un angle ($\alpha$) dans le même plan (PE, PR) de trace (Z-Z), perpendiculaire à l'axe (X-X) et passant par le milieu de l'arête coupante de l'outil de tronçonnage (2, 19) et de la gorge (3) de tronçonnage.

9. Dispositif selon l'une des revendications 2 à 7, caractérisé en ce qu'il comprend un bras (17) de récupération et d'évacuation de l'extrémité tronçonnée (5), disposé sensiblement parallèle à l'axe (X-X) de la pièce tubulaire (T), dans l'extrémité (5) à tronçonner de celle-ci et au voisinage de sa partie supérieure ce bras (17) étant monté rotativement sur un pivot (18) afin d'évacuer latéralement l'extrémité tronçonnée (5).

10. Dispositif selon la revendication 2, caractérisé en ce que l'outil de tronçonnage est un outil de coupe (2).

11. Dispositif selon la revendication 2, caractérisé en ce que l'outil de tronçonnage est une meule-disque (19).

## Patentansprüche

1. Verfahren zum Abnehmen des abgetrennten Endes (5) von einem Rohrstück (T), insbesondere einem Gussrohr (4), bei dem das Rohrstück (T) auf einer Trag- und Halteeinrichtung (1) waagrecht angeordnet ist, die seine Drehung um seine Längsachse (X-X) gestattet und es gegen axiale Verschiebung festlegt, wobei sein Ende (5) durch wenigstens ein Schneid- oder Abtrennwerkzeug (2) abgetrennt wird, das sich in radialer Richtung (DR) zur Achse (X-X) bewegt, dadurch gekennzeichnet, dass man einen Spreizkeil (E, 8) einsetzt, der mittels einer Längsachse des Rohrstücks parallelen Achse (Y-Y) an einem Träger (16, 13) drehbar gelagert ist, der den Spreizkeil (E, 8) im Ausmass der Abtrennung in die vom Abtrennwerkzeug (2) gebildete Nut (3) vorschiebt, wobei das Vorschieben oder Eindringen in einer zur Achse (X-X) des Rohrstücks (T) senkrechten Ebene (PE) in einer radialen Annäherungsrichtung (DE) zur Achse (X-X) stattfindet, und zwar unter Einsetzen des Keils (E) während des Abtrennens in die vom Schneidwerkzeug (2) in der Wand des Rohrstücks (T) ausgeführte Nut (3) derart, dass im Verlauf des Abtrennens am Ende (5) des Rohrstücks (T) ein Druck ausgeübt wird, der am Ende des Abtrennens das Spreizen und Entfernen des abgetrennten Endes (5) herbeiführt, wodurch das Herabfallen des Endes auf das Schneidwerkzeug (2) und dessen Zerstörung vermieden werden.

2. Vorrichtung zum Abnehmen des abgetrennten Endes (5) von einem Rohrstück (T), insbesondere einem Gussrohr (4), bei dem das Rohrstück (t) auf einer Trag- und Halteeinrichtung (1) waagerecht angeordnet ist, die seine Drehung um seine Längsachse (X-X) gestattet und es gegen axiale Verschiebung festlegt, wobei sein Ende (5) durch wenigstens ein Schneid- oder Abtrennwerkzeug (2), abgetrennt wird, das sich in radialer Richtung (DR) zur Achse (X-X) bewegt, dadurch gekennzeichnet, dass sie eine Spreizrolle (E) aufweist, die mittels einer zur Längsachse des abzutrennenden Rohrstücks parallelen Achse (Y-Y) an einem Träger (16, 13) drehbar gelagert ist, der seinerseits in einer radialen Richtung (DR) zu dieser Längsachse (X-X) in einer zur Achse (X-X) des Rohrstücks (T) senkrechten Ebene (PE) verschiebbar ist, wobei sich die Ebene (PE) gegenüber den Flanken der durch das Abtrennwerkzeug (2, 19) ausgebildeten Nut (3) im wesentlichen mittig erstreckt und durch die Mitte der Schneide des Abtrennwerkzeugs (2, 19) hindurchgeht, wobei diese Spreizrolle (E) ein kreisförmiges Teilprofil (8) mit dem Querschnitt eines gleichschenkeligen Trapezes hat, und einen von zwei geneigten Flanken (9a, 9b) begrenzten zylindrischen Streifen (30) aufweist, wobei dieser Keil (8) so bemessen ist, dass er in die kreisförmige Nut (3) in der Wand des Rohrstücks (T) während des Eindringens des Abtrennwerkzeugs (2) in radialer Richtung (DR) derart eindringt, dass seine geneigten Flanken (9a, 9b) auf die äusseren Kanten der Nut (3) einen Druck ausüben.

3. Vorrichtung nach Anspruch 2, dadurch gekennzeichnet, dass die Spreizrolle (E) zwei seitliche zylindrische Teile (10a, 10b) aufweist, die beiderseits des kreisförmigen Teils (8) koaxial hierzu und mit diesem fest verbunden angeordnet sind, und deren gleichgrosse Durchmesser kleiner als der Durchmesser des mittigen Streifens (30) des kreisförmigen Keils (8) sind, wobei die Umlauf- und Drehachse der zylindrischen Teile und des Keils die gesamte Achse (X-X) der Spreizrolle (E) bildet, wobei diese zylindrischen Teile (10a, 10b) vorgesehen sind, um am Ende des Abtrennes vom Rohrstück (T) und dessen abgetrennten Ende (5) in Anlage zu kommen, um den Hub der Rolle (E) in radialer Richtung zu begrenzen.

4. Vorrichtung nach einem der Ansprüche 2 und 3, dadurch gekennzeichnet, dass die Breite (c) der grossen Basis des den kreisförmigen Keil (8) bildenden gleichschenkeligen Trapezes grösser als die Breite (b) der kreisförmigen Nut (3) ist, die ihrerseits gleich der Breite der Schneide des Schneidwerkzeugs (2) ist.

5. Vorrichtung nach einem der Ansprüche 3 und 4, dadurch gekennzeichnet, dass die zylindrischen Teile (10a, 10b) der Spreizrolle (E) jeweils durch einen koaxialen Drehzapfen (11) verlängert sind, der im Lager eines seitlichen Schenkels (12) eines tragenden Gabelkopfs (13) der Spreizrolle (4) frei drehbar und somit zwischen den Schenkeln (12) des Gabelkopfs (13) lose gelagert ist, wobei zwischen jedem zylindrischen Teil (10a, 10b) und dem antsprechenden Schenkel (12) des Gabelkopfs (13) ein axiales Spiel (j) beibehalten wird, um ein Selbstzentrieren der Rolle (E) in der Nut (3) und das axiale Verschieben der Rolle (E) längs seiner Achse (Y-Y) zum Entfernen des abgetrennten Rohrendes (5) zu ermöglichen.

6. Vorrichtung nach Anspruch 5, dadurch gekennzeichnet, dass die Summe der axialen Spiele (j) zwischen jedem Schenkel (12) des Gabelkopfs (13) und dem angrenzenden zylindrischen Teil (10a, 10b) kleiner als die Breite (c) der Basis des kreisförmigen Keils (8) ist, d.h. des den Querschnitt des Keils bildenden gleichschenkeligen Trapezes, vermindert um die Breite (a) der mittleren Abflachung (30) dieses Keils (8), um das Eindringen des letzteren in die Nut (3) zu Beginn des Abtrennens zu ermöglichen.

7. Vorrichtung nach einem der Ansprüche 5 und 6, dadurch gekennzeichnet, dass der Gabelkopf (13) am Ende eines tragenden Stellzylinders (16) der Spreizrolle (E) befestigt ist, wobei der Stellzylinder (16) an einem feststehenden Gestell (7) befestigt ist, und seine mit der radialen Richtung (DE) zusammenfallende Achse (DE) in der zur Achse (X-X) des Rohrstücks (T) senkrechten Ebene (PE) und in der durch die Mitte der Schneide des Schneidwerkzeugs (2) hindurchgehenden Spurmittelebene (Z-Z) liegt, so dass die Spreizrolle (E) im Verlauf des Abtrennens in der radialen Richtung (DE) verschoben und ihre Umlaufachse (Y-Y) parallel zur Längsachse (X-X) des Rohrstücks (T) gehalten werden kann.

8. Vorrichtung nach Anspruch 2, dadurch gekennzeichnet, dass die radiale Vorschubrichtung (DE) der Spreizrolle (E) und die radiale Vorschubrichtung (DR) des Abtrennwerkzeugs (2, 19) unter einem Winkel ($\alpha$) in derselben Ebene (PE, PR) der Spur (Z-Z) versetzt sind, wobei die Ebene zur Achse (X-X) senkrecht ist und durch die Mitte der Schneide des Abtrennwerkzeugs (2, 19) und der Abtrennut (3) hindurchgeht.

9. Vorrichtung nach einem der Ansprüche 2 und 7, dadurch gekennzeichnet, dass sie einen Arm (17) zum Aufnehmen und Entfernen des abgetrennten Endes (3) aufweist, der im wesentlichen parallel zur Achse (X-X) des Rohrstücks (T) angeordnet ist und sich in dessen abzutrennendem Ende (5) und in Nähe des Oberteils befindet, wobei dieser Arm (17) an einem Drehzapfen (18) drehbar gelagert ist, um das abzutrennende Ende (5) seitlich zu entfernen.

10. Vorrichtung nach Anspruch 2, dadurch gekennzeichnet, dass das Abtrennwerkzeug ein Schneidwerkzeug (2) ist.

11. Vorrichtung nach Anspruch 2, dadurch gekennzeichnet, dass das Abtrennwerkzeug eine Schleifscheibe (19) ist.

## Claims

1. Method for separating from a tubular member (T), such as a cast-iron pipe (4), the cut end (5) of the latter, in which the tubular member (T) is arranged horizontally on support and retaining means (1) allowing it to rotate about its longitudinal axis (X-X) while preventing it from moving axially, its end (5) being cut-off by at least one cutting or parting tool (2) moving towards the axis (X-X) in a radial direction (DR), characterised in that one engages a spacer wedge (E, 8) mounted to rotate about an axis (Y-Y) parallel to the longitudinal axis of the tubular member on a support (16, 13) capable of moving it into the groove (3) produced by the cutting tool (2), as cutting progresses, the said movement or penetration taking place in a plane (PE) perpendicular to the axis (X-X) of the tubular member (T) in a radial direction (DE) approaching the said axis (X-X), by engaging the said wedge (E), during cutting, in the said groove (3) produced in the wall of the tubular member (T) by the cutting tool (2) in order to exert during cutting on the end (5) of the tubular member (T) a pressure which at the end of the cutting operation causes the parting and separation of the cut end (5), which prevents the said end from dropping onto the cutting tool (2) and damaging the latter.

2. Apparatus for separating from a tubular member (T), such as a cast-iron pipe (4), the cut end (5) of the latter, in which the tubular member (T) is arranged horizontally on support and retaining means (1) allowing it to rotate about its longitudinal axis (X-X) whilst preventing it from moving axially, its end (5) being cut by at least one cutting or parting tool (2) moving toward the axis (X-X) in a radial direction (DR), characterised in that it comprises a spacer roller (E) mounted to rotate about an axis (Y-Y) parallel to the longitudinal axis (X-X) of the tubular member (T) to be cut on a support (16, 13), in turn able to move in a radial direction (DE) towards this longitudinal axis (X-X) in a plane (PE) perpendicular to the axis (X-X) of the tubular member (T), the said plane (PE) being substantially central with respect to the sides of the groove (3) produced by the cutting tool (2, 19) and passing through the centre of the cutting edge of the cutting tool (2, 19), this spacer roller (E) having a profile in the form of a circular wedge (8) having the section on an isosceles trapezium comprising a central cylindrical band (30) bordered by two inclined sides (9a, 9b), the dimensions of this wedge (8) being such that it is able to penetrate the circular groove (3) formed in the wall of the tubular member (T) during the penetration of the cutting tool (2), in a radial direction (DR) so that its inclined sides (9a, 9b) exert a pressure on the outer edges of the groove (3).

3. Apparatus according to Claim 2, characterised in that the spacer roller (E) comprises two lateral cylindrical parts (10a, 10b), located on either side of the circular wedge (8) coaxially and integrally with the latter and whereof the diameters, which are equal, are less than that of the central band (30) of the circular wedge (8), the axis of revolution and rotation of the said cylindrical parts and of the wedge constituting the general axis (Y-Y) of the spacer roller (E) and the cylindrical parts (10a, 10b) being provided in order to bear at the end of cutting against the tubular member (T) and its cut end (5) in order to limit the travel of the roller (E) in the radial direction (DE).

4. Apparatus according to one of Claims 2 and 3, characterised in that the width (c) of the large base of the isosceles trapezium forming the circular wedge (8) is greater than the width (b) of the circular groove (3), itself equal to the width of the edge of the cutting tool (2).

5. Apparatus according to one of Claims 3 and 4, characterised in that the cylindrical parts (10a, 10b) of the spacer roller (E) are each extended by a coaxial journal (11), mounted to rotate freely in the bearing of a lateral upright (12) of a clevis (13) supporting the spacer roller (E), which is thus mounted loosely between the uprights (12) of the clevis (13), an axial clearance (j) being preserved between each cylindrical part (10, 10b) and the corresponding upright (12) of the clevis (13) in order to allow self-centering of the roller (E) in the groove (3) and the axial displacement of the roller (E) along its axis (Y-Y) for the purpose of moving away the cut tubular end (5).

6. Apparatus according to Claim 5, characterised in that the sum of the axial clearances (j) between each upright (12) of the clevis (13) and the adjacent cylindrical part (10a, 10b) is less than the width (c) of the base of the circular wedge (8), i.e. of the isosceles trapezium forming the section of the said wedge, lessened by the width (a) of the central flat portion (30) of this wedge (8), in order to guarantee the penetration of the latter into the groove (3) at the beginning of cutting.

7. Apparatus according to one of Claims 5 and 6, characterised in that the clevis (13) is fixed to the end of a jack (16) supporting the spacer roller (E), supported by a fixed frame (7) and whereof the axis (DE) which coincides with the radial direction (DE) is situated in the aforesaid plane (PE) perpendicular to the axis (X-X) of the tubular member (T) as well as in the central line of development (Z-Z) passing through the centre of the cutting edge of the cutting tool (2), so that the spacer roller (E) can be moved in the radial direction (DE) during cutting whilst keeping its axis of revolution (Y-Y) parallel to the said longitudinal axis (X-X) of the tubular member (T).

8. Apparatus according to Claim 2, characterised in that the radial direction of forwards movement (DE) of the spacer roller (E) and the radial direction of forwards movement (DR) of the cutting tool (2, 19) are staggered by an an angle $\alpha$ in the same plane (PE, PR) of development (Z-Z), perpendicular to the axis (X-X) and passing through the centre of the cutting edge of the cutting tool (2, 19) and of the cutting groove (3).

9. Apparatus according to one of Claims 2 to 7, characterised in that it comprises an arm (17) for the recovery and discharge of the cut end (5), arranged substantially parallel to the axis (X-X) of the tubular member (T), in the end (5) to be cut from the latter and in the vicinity of its upper part this arm (17) being mounted to rotate on a pivot (18) in order to discharge the cut end (5) laterally.

10. Apparatus according to Claim 2, characterised in that the parting tool is a cutting tool (2).

11. Apparatus according to Claim 2, characterised in that the parting tool is a grinding disc (19).

FIG.1

0 115 759

FIG. 2

FIG. 3

0 115 759

FIG. 4

FIG. 5

13

FIG. 6

FIG. 7